(19) Europäisches Patentamt

European Patent Office

Office européen des brevets

(11) **EP 2 400 721 A1**

(12) **EUROPEAN PATENT APPLICATION**

(43) Date of publication:
**28.12.2011 Bulletin 2011/52**

(51) Int Cl.:
*H04L 29/08* (2006.01)     *H04W 4/02* (2009.01)

(21) Application number: **10167423.2**

(22) Date of filing: **25.06.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(71) Applicant: **Telefónica, S.A.**
**28050 Madrid (ES)**

(72) Inventor: **López López, José Manuel**
**28029 Madrid (ES)**

(74) Representative: **Di Bernardo, Antonio et al**
**Metroconsult S.r.l.**
**Via Foro Buonaparte, 51**
**20121 Milano (IT)**

(54) **System and method for validating a user equipment location in a telecommunication network**

(57)     It is disclosed a method for validating a location provided by a user equipment requesting a service to a telecommunication network. The network receives (202) an information relating to the location of said user equipment and detects (203-205) the network access point to which said user equipment is connected. The method then provides for retrieving in a database historical information relative to locations of user equipments during connections to the detected network access point. A validation index is automatically generated based on the received location and on the retrieved historical information. The location provided by the user equipment is validated based on the validation index.

A telecommunication network suitable to implement the method is also disclosed.

Fig.2

Printed by Jouve, 75001 PARIS (FR)

Description

## DESCRIPTION

**TECHNICAL FIELD**

The present invention relates to the field of telecommunications, and in particular to methods for providing location dependent services as well as emergency services via a telecommunication network. More particularly, the invention relates to a method for validating a user equipment location in a telecommunication network according to the preamble of claim 1. The invention also relates to a telecommunication network suitable for providing the above methods.

**BACKGROUND ART**

Telecommunication networks are known which provide regular and emergency services to users of the networks.

Users access the network by means of user equipments provided with SIM (Subscriber Identity Module) cards. Regular services are provided to users whose SIM card has been authenticated by the network, that is so able to bill the services, while emergency services (like emergency calls) are delivered also to users that do not have SIM cards or whose SIM card is not completely authenticated.

It is also known that certain services are location dependent services, i.e they are delivered according to the location of the user.

Present telecommunication networks suffer the problem of fraudolent use of these location dependent services since users can fake the location provided to the network in order to obtain the service.

This problem is particularly felt in emergency services, like emergency calls.

Unlike regular calls, emergency calls (e.g. 112 in Europe, 911 in the USA) are routed by the network according to the location of the caller, so that the call gets to the nearest Public Safety Answering Point (PSAP). From here, the police, fire brigades, ambulances, etc, are alerted so they can get to the caller in distress as soon as possible.

Therefore, it is clear that accurately detecting the caller's location is of paramount importance: in true emergency calls, wrong location misleads the relief personnel and delays or makes impossible getting to the caller, who might die. In fake emergency calls, the caller does not really need help and is likely to provide a wrong location on purpose. While the emergency personnel is out they cannot deal with real emergency cases, apart from being a waste of time and money.

In traditional Public Switched Telephone Networks (PSTN) the caller requesting an emergency call accesses the network via an access point whose identifier (APID) is used to select the PSAP in charge of the administrative area corresponding to the access point identifier.

PSTN was not designed to carry user location information. However, packed switched telecommunication networks, allow users to exchange IP packets with the networks, therefore providing the user the possibility to provide user location to the network.

Next generation nextworks, like those actually under study of the 3GPP working group for LTE and LTE-advanced, provide for an IP Multimedia Subsystem (IMS) which comprises all core networks elements for provision of IP multimedia services, comprising audio, video, text, chat and a combination of them delivered over the Packet Switched (PS) domain. In particular 3GPP technical specification TS 23.167 (versions 8.5.0 Release 8 and 9.4.0 Release 9) "IP Multimedia Subsystem (IMS) emergency sessions" discloses a network based on IETF SIP (Session IP) signalling, which has been extended to carry location information.

Emergency caller location can be presently retrieved within the network (and in particular within IMS) in several ways:

-     Manual location, in which the caller configures his location in his terminal, or provides it by voice when the call is answered. This method is accurate only if the caller provides the right location.
-     GPS-based location, in which the user equipment obtains its location from a GPS receiver and delivers it in the emergency call. This method is limited only to GPS-enabled user equipments and needs a clear view of the sky to be accurate; furthermore it does not work well indoors.
-     Network-based location, in which data from the access network is used to estimate the caller location. Almost always, the access provider uses the location of the access point (base station in mobile telephony, hotspot in Wifi, and so on) the caller connects to. This method is far less accurate than the others but is always available. User-provided location is desirable for accuracy reasons. However, it is not reliable because the caller may cheat (fake call). User-provided location should therefore be validated. 3GPP recommends this validation in section 6.2.2 of TS 23.167 v 8.5.0 and 9.4.0, but does not specify any validation system or method.

Up to date, one way of validating user-provided location is based on a Visual Validation of user-provided location against network-based location by the PSAP human operator. The location of the caller is presented on a display toghether with the location (indicated as coverage area) of the access point the caller is connected to. The degree of nearness of both locations determines whether the emergency call is authentic (nearby locations) or fake (distant locations).

Visual Validation has several drawbacks. First of all it requires a user to make a visual comparison, therefore requiring manpower that could be dedicated to other duties. Moreover as the decision is taken by a user, it is subjective and therefore not always correct. Also the coverage data could not be updated and the resulting shape that is considered by the user could be rather inaccurate.

Another way for validating emergency calls has been proposed by the American organization NENA, aiming at emergency services over IP networks. This organization has proposed a Validation of Civic Location (i.e. street name, number, city, ...); according to their requirements document: "It must be possible to determine, BEFORE an emergency call is placed, if a civic address is valid.[...] A'911 Valid Address Database, which contains all valid street addresses within a defined area, should be used as the basis to determine validity of a civic address". Validation of Civic Location has the drawback that it checks whether a civic address exists, not whether the caller is located at that address. Therefore validation does not prove to be effective since the fact that the caller provides an existing address does not guarantee that the caller makes the call from that address. Furthermore this solution does not allow validating locations that may be provided as geographic coordinates (latitude and longitude).

It is therefore clear that there's a need for a method for validating user-provided location for set-up of emergency calls or, in general, of emergency services.

## OBJECTS AND SUMMARY OF THE INVENTION

It is an object of the present invention to overcome the drawbacks of the prior art.

In particular, it is an object of the present invention to present a method for validating user-provided location which is alternative to the prior art.

It is another object of the present invention to provide a method for validating user-provided location which provides an objective and reliable result.

According to the invention these and other objects are achieved by means of a method comprising the features of the annexed claims, which are an integral part of the present description.

The invention also relates to a network and a relevant computer system adapted to implement this method.

According to one aspect of the invention, user-provided location is validated by comparing it with historical information relating to the locations of user equipments during connections to the access point the user equipment is actually connected to. A validation index is automatically generated based on the received location and on the retrieved historical information, and the user-provided location is validated based on the validation index.

As a preferred example, a probability density function (or an histogram approximating it) is associated to each access point of the network and allows calculation of the probability that the user equipment is connecting to that access point from the user-provided location.

If the probability that the user equipment is connected to the access point from the location provided to the network is higher than a given threshold, then the user-provided location is positively validated, otherwise it is negatively validated.

This solution provides an automatic validation by the network which does not require a network operator to compare points or shapes displayed on a screen, therefore allowing an objective validation.

In one embodiment, historical data are updated for each connection wherein the user equipment provides his location during regular services; in this way the validation method is always updated and the reliability improved.

In one preferred embodiment, the validation method is implemented each time a user equipment requests an emergency service and provides his location. In this embodiment, routing of the user equipment's request to the nearest PSAP depends on the result of the validation process. In particular, if the emergency service is an IMS service, or if the request is served by the network via IMS, the E-CSCF (Emergency-CSCF) queries the LRF (Location Retrieval Function) for validation of the user-provided location and to this purpose provides the LRF with the location to be validated and the identifier of the access point at which the user equipment is connected. LRF then returns a validation response message which allows E-CSCF to manage the emergency service.

In one embodiment, if validation of the user provided location fails, then the call is subject to a special treatment which can provide for blacklisting of the SIM card present in the user equipment and/or lowering of the call priority.

The invention is also directed to a network and to a computer system adapted to implement a method for validating user provided locations.

Further objects and advantages of the present invention will be clear from the following description of a preferred embodiment disclosed as non limitative and exemplificative example.

**BRIEF DESCRIPTION OF THE DRAWINGS**

The invention will be presented here below with reference to non limiting examples, provided for explicative and non limitative reasons in the annexed drawings. These drawings illustrate different aspects and embodiments of the present invention and, where appropriate, like structures, components, materials and/or elements in different figures are indicated by reference numbers.

Figure 1 illustrates a telecommunication network according to the invention.
Figure 2 shows the flow of information within the network of figure 1.
Figure 3 is a flow diagram illustrating the method according to a first embodiment of the invention.
Figure 4 shows a PDF of access point with normal spatial distribution of call locations
Figure 5 shows call locations for a radio access point
Figure 6 shows the flow of information within the IMS of figure 1 when statistical data are collected to implement the method according to an embodiment of the invention.

**DETAILED DESCRIPTION OF THE INVENTION**

While the invention is susceptible of various modifications and alternative constructions, certain illustrated embodiments thereof have been shown in the drawings and will be described below in detail. It should be understood, however, that there is no intention to limit the invention to the specific form disclosed, but, on the contrary, the invention is to cover all modifications, alternative constructions, and equivalents falling within the spirit and scope of the invention as defined in the claims.

In the following description the use of "e.g.," "etc," and "or" indicates non-exclusive alternatives without limitation unless otherwise noted. The use of "including" means "including, but not limited to," unless otherwise noted. The term "location" is used to indicate a place or a geographical area which can be reduced to a position or can be defined more vaguely. The term "call" is in general used to indicate a connection between a user equipment and the network, which can be used for exchanging voice and/ or data.

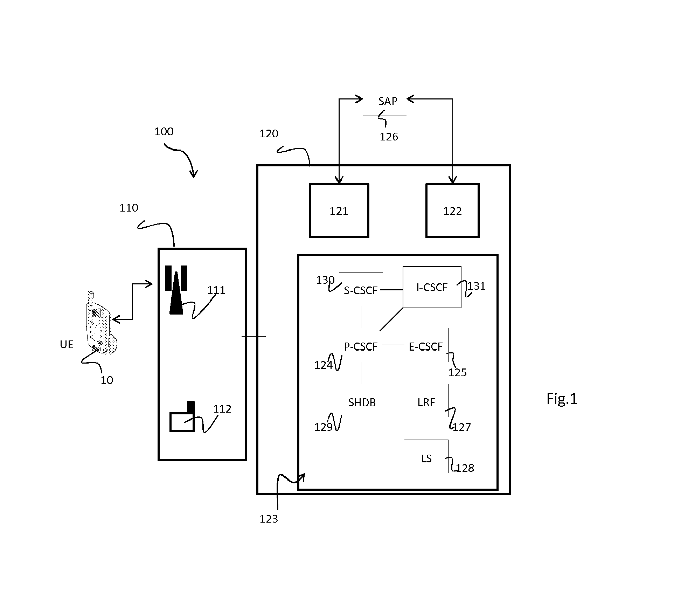

Figure 1 discloses a user equipment (UE, 10) connecting to a telecommunication network 100 which allows implementing a method for validating user-provided location and for delivering emergency services to the user.

In the embodiment of figure 1, network 100 is a Public Land Mobile Network (PLMN) comprising an access subsystem 110 and a Core Network 120.

In the embodiment of figure 1, access subsystem 110 is an IP-Connectivity Access Network (IP-CAN) comprising all the equipments for connection with the UE; in the following these equipments will be referred to as access points since they are the point of access to the network. Depending on the technology, an access point can be a radio base station 111 or a NodeB or an e-NodeB or any other device providing IP services like wi-fi hotpots 112.

Core Network 120 is connected to the access subsystem 110 and comprises the databases and the application servers necessary for managing and routing the information between users of the network or between users of the network and external networks. Core network 120 comprises elements of the packet switched domain 121 and of the circuit switched domain 122. Core network 120 also comprises an IP-Multimedia Subsystem (IMS) 123.

Some architectural blocks of figure 1 are the same of the IP Multimedia Subsystem provided by the 3GPP technical specifications TS23.002 and TS23.228; these blocks are per se known, therefore they will not be described in detail as they are known to a person skilled in the art, the following description will focus only on the new features necessary to implement the method for validating user-provided locations. Elements provided by the standard are indicated with the standard symbols and abbreviations indicated in the annexed table 1.

In the embodiment of figure 1, Public Safety Answering Point (PSAP) 126 is connected to an external network, therefore network 100 is connected to the PSAP via either the packet switched domain 121 or the circuit switched domain 122. Other embodiments are possible, e.g. the PSAP could be connected to the access subsystem of network 100.

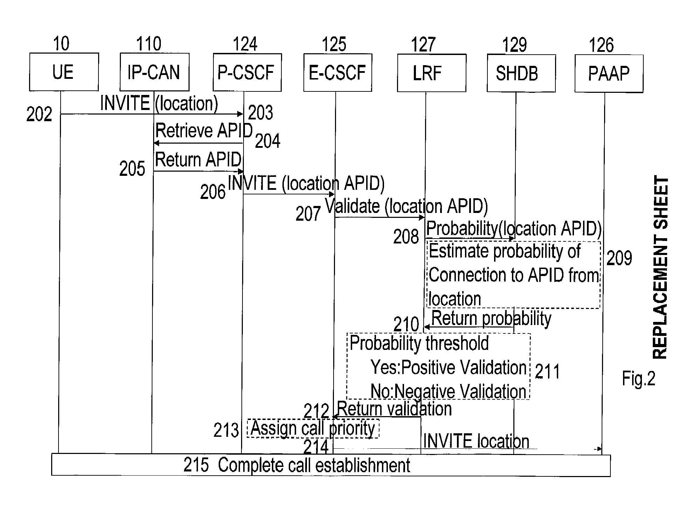

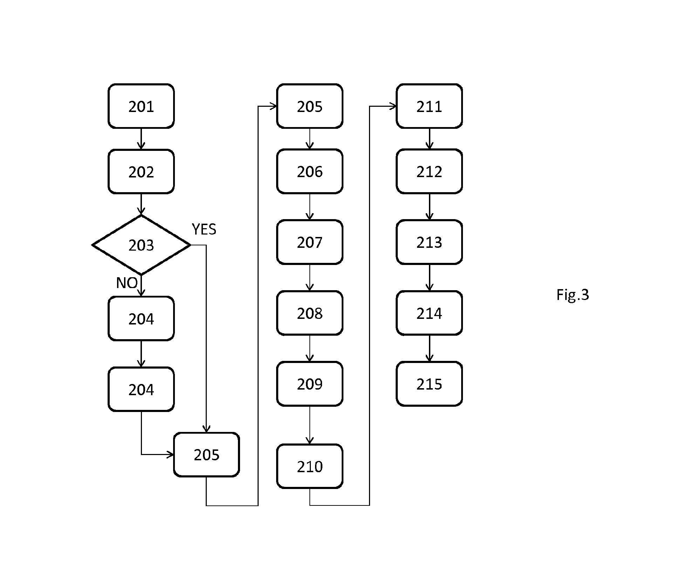

An embodiment of the method implemented by the PLMN network of figure 1 is disclosed with reference to figures 2 and 3.

The method starts at step 201, the user accesses the network with a user equipment UE; to the purpose of the present invention, a user equipment can be any device suitable to establish a wireless connection with an access point of the network. Therefore, within the meaning of the present description a user equipment can be one of a mobile phone, a smart phone, a personal computer, a laptop or a machine provided with a SIM (Subscriber Identification Module) or USIM (Universal SIM) card and relative connection means.

User equipment 10 preferably comprises an identification card which allows identifying the user for billing purposes; such an identification card can be a SIM (Subscriber Identification Module), a USIM (Universal SIM) or any other card suitable for the purpose of billing services. Such an identification card is not necessary for emergency services.

In the embodiment of figure 2 the UE 10 starts an emergency call sending an INVITE message in 202 to the Proxy-Call Session Control Function (P-CSCF) 124 through the IP-CAN 110. The message carries a location that has to be validated. In the following this location will be indicated as user-provided location as it is transmitted by the user equipment 10. To the purpose of the present invention "user-provided location" is intended to include both locations that are manually inserted by the user in the user equipment, and locations that are automatically inserted in an electronic message by the user equipment.

In a preferred embodiment the user-provided location is indicated by means of geographical coordinates, yet in another embodiment this location is expressed as a civic location (street, number, city).

In one embodiment location is inserted in the PIDF-LO block of the INVITE message; an example of PIDF-LO block carring the location (indicated in bold) is the following:

```
<presence xmlns="urn:ietf:params:xml:ns:pidf"
        xmlns:dm="urn:ietf:params:xml:ns:pidf:data-model"
        xmlns:gp="urn:ietf:params:xml:ns:pidf:geopriv10"
        xmlns:cl="urn:ietf:params:xml:ns:pidf:geopriv10:civicAddr"
        xmlns:gml="http://www.opengis.net/gml"
        entity="pres:point2d@example.com">
  <dm:device id="point2d">
   <gp:geopriv>
     <gp:location-info>
      <gml:Point srsName="urn:ogc:def:crs:EPSG::4326">
        <gml:pos>-34.407 150.883</gml:pos>
      </gml:Point>
     </gp:location-info>
     <gp:usage-rules/>
     <gp:method>Wiremap</gp:method>
   </gp:geopriv>
   <dm:deviceID>mac:1234567890ab</dm:deviceID>
   <dm:timestamp>2007-06-22T20:57:29Z</dm:timestamp>
  </dm:device>
</presence>
```

P-CSCF 124 receives the INVITE message and checks (step 203) if it contains the identifier of the access point to which the user equipment is connected (APID). If yes, the method goes to step 206. If not, the P-CSCF 124 retrieves the APID in 204 querying the IP-CAN 12 as specified in 3GPP TS 23.167 v 8.5.0 and 9.4.0 (section 6.2.1), where the term "Location Identifier" is used instead of APID.

Following the request from the P-CSCF, at step 205 the IP-CAN 110 returns an APID that depends on the type of access network.

At step 206, P-CSCF 124 routes the INVITE message to the Emergency-Call Session Control Function (E-CSCF) 125. In one embodiment, the routed INVITE message carries both the location received by the user (e.g. extracted from the PIDF-LO block) and the APID. In a different embodiment P-CSCF transmits separately the APID and the INVITE mesage to the E-CSCF.

At step 207, the E-CSCF 125 requests the Location Retrieval Function (LRF) 127 to validate the location specified by the UE 10; to this purpose both location and APID are sent bt the E-CSCF to the LRF 127. In one embodiment, the validation request is an initial or standalone request, e.g. an INVITE message, carrying both the location and the APID. Said message also serves as a request for retrieving routing information for reaching the PSAP 126 as specified in TS 24.229 "Internet Protocol (IP) multimedia call control protocol based on Session Initiation Protocol (SIP) and Session Description Protocol (SDP)" v. 9.3.1 (section 5.11.3).

In order to validate the location provided by the user equipment, LRF 127 (step 208) requests from Spatial Histogram Database (SHDB) 129 the probability that the UE 10 connects to the network via the access point identified by the APID from the received location.

In one embodiment, SHDB 129 (step 209) retrieves from a memory area a probability density function (PDF) representing the spatial distribution of the events corresponding to connections of user equipments to the access point identified by the APID received from E-CSCF. Then the probability that UE 10 is connected to that access point is calculated by integrating the PDF in a region centered in the received location.

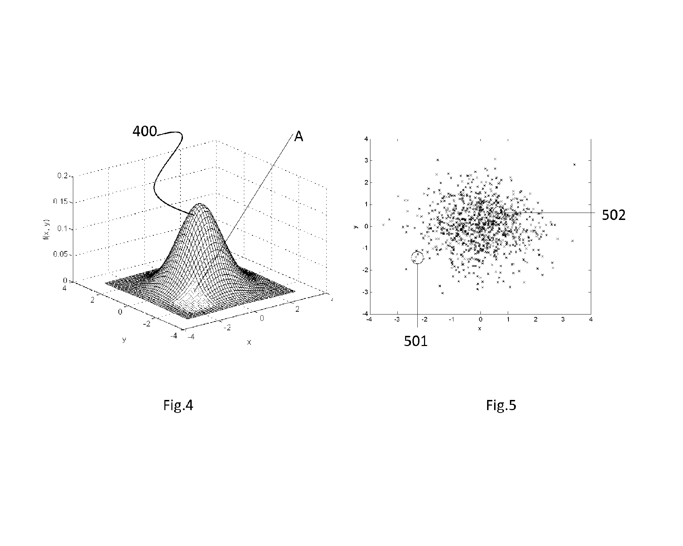

Details of the PDF and of the probability estimation are expalined below with reference to figures 4 to 6.

SHDB 129 returns the probability to the LRF 127 at step 210. The LRF 127 validates the location (step 211) by comparing the probability returned by SHDB with a decision threshold.

If the probability is higher than the decision threshold, the UE 10 is likely to connect to the access point identified by the APID from the location provided to the network, therefore LRF positively validates the location. Differently LRF negatively validates the location and the service (in this case the emergency call) is not delivered to the user or is subject of special treatment (e.g. it is not treated as a regular emergency call and its priority is lowered or the identification card, e.g. the USIM, is blacklisted). Optionally, if LRF negatively validates the location, LRF takes the steps for locating the call using a network-based method requesting LS 128 (Location Server) to do so, and the PSAP is selected based on said location and not on the original location provided by the user equipment. LRF behaviour in this case depends on regulatory requirements.

LRF 127 returns the result of the validation process to the E-CSCF 125 (step 212), and also returns routing information for reaching the PSAP 126 according to the location processed. In one embodiment, the result of the validation is returned in a 300 "Multiple Choices" SIP response message, carried in a new private header, e.g. "P-Location-Validation-Result", which can be set to "Yes" (positively validated) or "No" (negatively validated). Private headers extensions to SIP for 3GPP are defined in the Request For Comments (RFC) 3455 issued by IETF. According to the invention the 300 SIP response message is provided with a validation field for carrying the validation result. Said message also carries the routing information for reaching the PSAP 126 in the Contact header as specified in TS 24.229 v. 9.3.1 (section 5.12.2). In another embodiment, the result of the validation is returned in a SIP response message of the same or different type (3xx or other), with an equivalent header or header parameter indicating the result of the validation. In another embodiment, he result of the validation is returned in messages of different type depending on whether the location is positively validated or negatively validated. A positive validation is returned as a 300 SIP response with the routing information for reaching the PSAP 126 in the Contact header. A negative validation is returned as a 424 "Bad Location Information" SIP response with the Geolocation-Error header set to new error code (e.g. 12) "Location unsuccessfully validated" or equivalent, with the routing information for reaching the PSAP 126 in the Contact header in case regulatory requirements force to deliver the emergency call, even though if it is negatively validated.

Based on the validation result returned by LRF, E-CSCF 125 decides (step 213) whether the call should be processed in an ordinary way (in case of positively validated calls) or should be subjected to a special policy e.g. low-priority queueing, black-listing, etc (in case of negatively validated calls).

In case the call is to be treated in an ordinary way, E-CSCF 125 routes the call to the PSAP 126 (step 214) using the routing information received from the LRF at step 212. Usual IMS call establishment between the UE 10 and the PSAP 126 is completed in 215.

In one embodiment, in case LRF negatively validates at step 211 the location provided by the user equipment, E-CSCF 125 takes the steps for locating the call using a network-based method requesting LRF 127 to do so. E-CSCF then routes the call to the appropriate PSAP according to the new location. In one embodiment, such a network-based method provides for automatic estimation of the user equipment's location based on data from the access subsystem 110, as an example knowing the cells covering the user equipment (data being stored in the HLR, Home Location Register, and in the VLR, Visitor Location Register) it is possible to overlap the cells coverage area to estimate the user equipment's location.

As explained above with reference to figures 2 and 3, to perform validation of user-provided locations, the method hereby proposed makes use of a statistical approach whereby historical data are used to validate the location provided by the user equipment.

In the preferred embodiment, these historical data are statistical data which comprise the probability density function (PDF) of each access point of the network. This PDF shows how the callers that connect to the network using that access point are distributed around it. By definition, the probability that a user equipment connects to the access point from the region he claims equals the volume under the PDF in that region.

Figure 4 shows an example of PDF 400 having normal spatial distribution, which is represented in the x,y space corresponding to the coordinates of the user equipments, as an example, x and y can be latitude and longitude or northing and easting UTM coordinates.

Mathematically, the probability of connection from the region A is expressed in (1), where f(x, y) is the PDF for connection from the point (x, y).

$$P((x, y) \in A) = \iint_{(x,y) \in A} f(x, y) dx dy \qquad (1)$$

In one embodiment, PDF is estimated based on the access point characteristics: knowing the transmission cone of the antenna and the transmission power a first estimation of the electromagnetic field in the sourroundings of the antenna is known; PDF is therefore taken as the electromagnetic field distribution. This approach can be further improved by knowing the characteristics of the coverage area (e.g. presence of buildings or mountains) changing the electromagnetic field distribution in the coverage area and therefore the PDF.

In one preferred embodiment, PDF is estimated by collecting the location of calling user equipments. Figure 5 shows the calls' location for a radio access point detected in one experiment; sparse areas (501) mean low probability of connection from there, while dense areas (502) mean high probability of connection.

In one embodiment, PDF is estimated by the spatial histogram of the locations collected out of calls (emergency or not) using GPS-enabled IMS terminals that use the same access point. Within the aim of the present invention, the term "histogram" is not to be restricted to the graphical representation of data divided per categories, "histogram" is to be understood in a broad sense as a mapping that counts the number of observations that fall into various disjoint categories; therefore an "histogram" does not necessary requires to be presented as a graph. In this embodiment the space (x,y) of figure 4 is divided in areas ($D_x$, Dy) corresponding to the cathegories of the hystogram, and the method for estimating PDF provides for counting the calls received from each region ($D_x$, $D_y$) of the observation space (x,y). The probability of connection from the region A can be estimated as the volume under the histogram in that region. Equation (2) shows this concept, where h[$x_c$, $y_c$] is the histogram that approximates the PDF f(x, y) in the histogram box centered in (xc, $y_c$), and Dx, Dy are the widths of the histogram categories in the axes x and y, respectively.

$$P((x, y) \in A) \approx \sum_{(x_c, y_c) \in A} \sum h[x_c, y_c] D_x D_y \qquad (2)$$

Spatial histograms are preferably calculated from regular calls (not emergency) bearing user-provided location. This type of calls is expected to become increasingly popular due to Location Based Services and GPS-enabled smart phones, whose number is growing in PSTN and will likely become a standard feature in next generation networks comprising IMS. In one embodiment, SHDB is updated each time is received a new call or a new request of services providing a user equipment location, in particular a GPS location. In other words, SHDB is updated at each connection wherein the user provides his location.

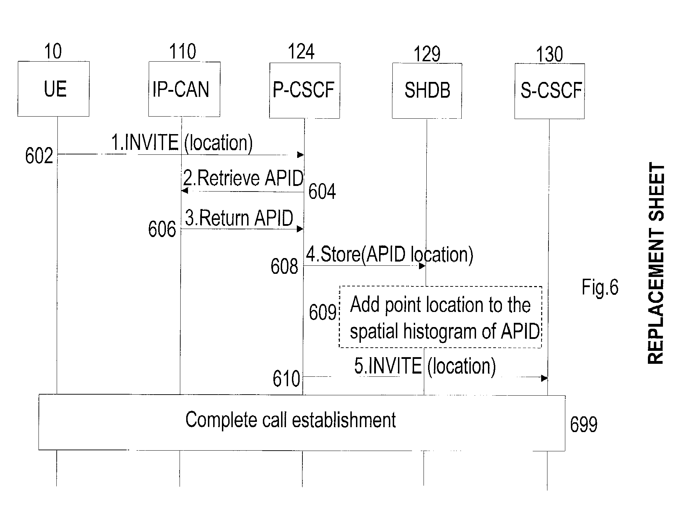

Figure 6 shows the flows of information within the network for calculating spatial histograms to be stored in the SHDB.

The UE 10 starts a regular call (or more in general request a regular service, like an Internet connection service) sending an INVITE message in 602 to the P-CSCF 124 through the access network IP-CAN 110. The message carries the UE 10 location (e.g. from GPS).

In one embodiment location is inserted in the PIDF-LO block of the INVITE message as indicated in the example above described with reference to figures 2 and 3.

If the INVITE does not contain the APID (Access Point Identifier), the P-CSCF 124 retrieves the APID (step 604) querying the IP-CAN 110.

IP-CAN 110 returns an APID (step 606) that depends on the type of access network. The APID may be a 3G base station identifier, a WiFi hotspot identifier, etc.

P-CSCF 124 reads the UE 10 location from the PIDF-LO block of the INVITE message received at step 602.

P-CSCF 124 then stores the tuple (APID, location) in the SHDB 129, which adds the coordinates of location to the histogram of APID in 609 (i.e., the histogram is updated with a new location sample). In the preferred embodiment, SHDB 129 stores histograms based on collection of geographical locations, therefore if the location transmitted by the user equipment in the INVITE message is a civic location (street, number, city), SHDB retrieves the coordinates of this location and provides for updating the histogram.

Following updating of SHDB, P-CSCF 124 sends the INVITE message to the S-CSCF 130 (step 610), and the usual IMS call establishment is completed in 699.

From the above description the features of the invention are clear.

A person skilled in the art can therefore use the statistical validation method above described for validating user-provided locations for any reason: providing emergency services, providing location based services, security or marketing reasons, and so on.

As an example, if the user requests a location based IP service (like downloading of a particular video in a particular area), when the user equipment starts a SIP (Session Initiation Protocol) session requesting the service, the P-CSCF receiving the requests, before interrogating the I-CSCF 131 for completing the authentication procedures, interrogates the LRF requesting validation of the user-provided location. In this case LRF interrogates the SHDB requesting the probability that the user equipment is connected to the access point from the location indicated in the invite message, and validates the user-provided location. In one embodiment, if the location is negatively validated, P-CSCF rejects the request from the user equipment and the SIP session is interrupted. In one embodiment, P-CSCF queries directly the SHDB without passing through the LRF.

In another embodiment, validation of user-provided location is requested after a SIP session is already started, as an example because the same Application Server provides different services, some of which being location dependent.

In this case the S-CSCF (Serving-CSCF) is alerted by the Application Server and requests validation of the user-provided location by quering a location validation network function (LVNF).

LVNF can be any network function or unit implementing validation methods as the one above described with reference to the emergency calls and the LRF. In one embodiment LVNF can be implemented within statistical database SHDB, therefore the S-CSCF queries the SHDB for location validation. Alternatively the Application Server can directly query the LVNF. In another embodiment, LRF is provided with new functionalities and is therefore used both for returning a PSAP URI suitable for the location of an emergency call, and for validating not-emergency calls. In this case Application Server that needs validation of a user equipment location queries either the S-CSCF (who in turns queries the LRF), or directly queries the LRF; in this embodiment LRF is therefore able to provide validation response messages to quering application servers and to S-CSCF.

It is also clear that notwithstanding the invention has been described with reference to particular computer servers, databases, equipments and functional blocks, these can be in any way grouped or divided while implementing as a whole the same functions of estimating the probability that a user equipment is connected to a given access point from a declared location.

As an example, SHDB can be integrated in the same computer server implementing the LRF, or can be a distributed database wherein records are stored on different computers, e.g. for security reasons.

From the above description, it is also clear that the invention is directed to a network implementing the method for validating user-provided locations and to a computer system, included in such network, and allowing the network to validate locations provided by user equipments in the network.

The invention is therefore intended to cover a telecommunication network comprising means for implementing the methods according to the above description and annexed claims. In particular, in one embodiment the invention is directed to a telecommunication network (in particular a mobile network) comprising:

an access subsystem (110) comprising a plurality of access points for connection to user equipments,
a core network (120) suitable for providing IP services to a user accessing the network (100) via a user equipment (10), and
detection means (110) for detecting the access point to which the user equipment is connected,
memory means (129) for storing statistical information representing the spatial distribution of the events corresponding to connections of user equipments to a network access point,
location retrieval means (124) for retrieving a location provided by said user equipment in a service request message,
probability calculation means (127) operatively connected to said memory means (129) and to said location retrieval means (124) for calculating a probability that the user equipment is connected to said access point based on the retrieved location and on the statistical information,
validation means (125) operatively connected to said probability calculation means (127) for validating the location provided by said user equipment if said probability is higher than a predetermined threshold.

The invention is also directed to a computer program comprising code portions that when run on a computer implements the validation methods above described and, more generally, the validation methods object of the annexed claims.

Finally it is also clear that the above validation method can be applied to any case wherein validation of a user equipment location is needed, independently from the source providing the location.

### TABLE 1

**Abbreviations**

| | |
|---|---|
| CS | Circuit Switched |

(continued)

**Abbreviations**

| | |
|---|---|
| CSCF | Call Session Control Function |
| E-CSCF | Emergency-CSCF |
| I-CSCF | Interrogating-CSCF |
| IMS | IP Multimedia Core Network Subsystem |
| IP | Internet Protocol |
| LRF | Location Retrieval Function |
| LTE | Long Term Evolution |
| P-CSCF | Proxy-CSCF |
| PLMN | Public Land Mobile Network |
| S-CSCF | Serving-CSCF |
| SHDB | Spatial Histogram Database |
| SIM | Subscriber Identity Module |
| SIP | Session Initiation Protocol |
| UE | User Equipment |

**Claims**

1. Method for validating a user equipment location in a telecommunication network (100), comprising the steps of receiving (202) an information relating to said location,
   detecting (203-205) the network access point to which said user equipment is connected,
   the method being **characterized by**
   retrieving in a database historical information relative to locations of user equipments during connections to the detected network access point,
   automatically generating a validation index based on the received location and on the retrieved historical information,
   validating (211) the location of said user equipment (10) based on said validation index.

2. Method according to claim 1,
   wherein said database comprises statistical information, in particular a probability density function or a statistical histogram relative to locations of user equipments during connections to the detected network access point,
   wherein said validation index is a probability that said user equipment (10) is connected to said network access point from the received location, and
   wherein the location provided by said user equipment is positively validated if said probability is higher than a predetermined threshold.

3. Method according to claim 1 or 2, wherein said location is provided by said user equipment (10), in particular it is automatically generated by said user equipment (10).

4. Method according to claim 3, wherein said user equipment requests an emergency service and wherein said request is served by the network based on the validation of the location provided by the user equipment (10).

5. Method according to claim 4, wherein if said location is negatively validated, user equipment's actual location is automatically estimated by the network (100) based on data from the access subsystem (110).

6. Method according to claim 4 or 5 wherein if said location is negatively validated, said request is served based on a priority lower than the priority assigned to emergency requests wherein location is positively validated.

7. Method according to claim 4, wherein said user equipment (10) comprises an identification card, and wherein said request is rejected and/or the identification card is blacklisted if said location is negatively validated.

8. Method according to claim 4, wherein said user equipment (10) comprises an identification code of said user equipment, and wherein said user equipment identification code is blacklisted if said location is negatively validated.

9. Method according to claim 3, wherein the user equipment comprises an identification card, wherein the user equipment requests a regular service and wherein the method further comprises the step of authenticating said identification card in order to start a SIP session, said SIP session being started only if the location provided by said user equipment is positively validated.

10. Method according to any of the previous claims, wherein the result of the validation is returned in a SIP response message, in particular a 300 SIP response message, said message having a header, in particular a private header, acting as a validation field which can be set to at least two different values associated to positive and negative validation.

11. Method according to claim 10, wherein if said location is positively validated said response message comprises a contact header and wherein said response message carries routing information for reaching a public safety answering point (126) in the contact header.

12. Method according to any of the previous claims, wherein the result of the validation is returned in messages of different type depending on whether the location is positively validated or negatively validated, preferably the response message being a 300 SIP response message if the location is positively validated, and a 424 SIP response message if the location is negatively validated.

13. Method according to any of the previous claims, wherein said statistical information comprises a statistical histogram approximating a probability density function, said probability density function representing the spatial distribution of the events corresponding to connections of user equipments to the detected network access point.

14. Method according to any of the previous claims, further comprising the step of updating said statistical data based on the location provided by user equipments at each connection wherein a user equipment requests a regular service and provides its location.

15. Method according to any of the previous claims, wherein said user equipment requests a service that needs location validation and wherein the method further comprises the step of updating said statistical data based on the location provided by said user equipment only if said location has been positively validated.

16. Telecommunication network comprising
an access subsystem (110) comprising a plurality of access points for connection to user equipments,
a core network (120) suitable for providing IP services to a user accessing the network (100) via a user equipment (10), and
detection means (110) for detecting the access point to which the user equipment is connected,
**characterized in that** said network comprises means for implementing the method according to any of claims 1 to 15.

17. Telecommunication network comprising
an access subsystem (110) comprising a plurality of access points for connection to user equipments,
a core network (120) suitable for providing IP services to users accessing the network (100) via a user equipment (10), and
detection means (110) for detecting the access point to which the user equipment is connected,
**characterized in that** said network comprises
memory means (129) for storing statistical information representing the spatial distribution of the events corresponding to connections of user equipments to a network access point,
location retrieval means (124) for retrieving a location provided by said user equipment in a service request message,
probability calculation means (127) operatively connected to said memory means (129) and to said location retrieval means (124) for calculating a probability that the user equipment is connected to said access point based on the retrieved location and on the statistical information,
validation means (125) operatively connected to said probability calculation means (127) for positively validating the location provided by said user equipment if said probability is higher than a predetermined threshold.

100

120

110

SAP

126

121

122

123

130 S-CSCF

I-CSCF 131

111

P-CSCF — E-CSCF

124 125

UE

SHDB — LRF

112

129 127

10

LS

128

Fig.1

EP 2 400 721 A1

REPLACEMENT SHEET

| 10 | 110 | 124 | 125 | 127 | 129 | 126 |
|---|---|---|---|---|---|---|
| UE | IP-CAN | P-CSCF | E-CSCF | LRF | SHDB | PAAP |

202 INVITE (location) 203

204 Retrieve APID

205 Return APID

206 INVITE (location APID)

207 Validate (location APID)

208 Probability(location APID)

209 Estimate probability of Connection to APID from location

210 Return probability

211 Probability threshold
Yes:Positive Validation
No:Negative Validation

212 Return validation

213 Assign call priority

214 INVITE location

215 Complete call establishment

Fig.2

Fig.3

Fig.4

Fig.5

Fig.6

**REPLACEMENT SHEET**

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2008/089288 A2 (QUALCOMM INC [US]; WACHTER ANDREAS K [US]; LIN LE-HONG [US]) 24 July 2008 (2008-07-24) * paragraphs [0011] - [0012] * * paragraphs [0046] - [0064] * * figures 1, 4-6 * | 1-17 | INV. H04L29/08 H04W4/02 |
| X | US 2008/046965 A1 (WRIGHT MICHAEL [US] ET AL) 21 February 2008 (2008-02-21) * paragraphs [0210] - [0223] * | 1-17 | |
| X | WO 2006/002458 A1 (UNISEARCH LTD [AU]; MALANEY ROBERT ANDERSON [AU]) 12 January 2006 (2006-01-12) * page 5, line 11 - page 7, line 30 * * page 12, line 8 - page 13, line 30 * * page 17, line 15 - page 18, line 20 * * page 31, line 28 - page 32, line 25 * | 1-17 | |
| X | US 2009/215427 A1 (HAWKINS JOHNNY D [US]) 27 August 2009 (2009-08-27) * paragraphs [0023] - [0028] * | 1-17 | TECHNICAL FIELDS SEARCHED (IPC) H04L H04W |

The present search report has been drawn up for all claims

| Place of search | Date of completion of the search | Examiner |
|---|---|---|
| Munich | 16 November 2010 | Veloso González, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 10 16 7423

This annex lists the patent family members relating to the patent documents cited in the above-mentioned European search report.
The members are as contained in the European Patent Office EDP file on
The European Patent Office is in no way liable for these particulars which are merely given for the purpose of information.

16-11-2010

| Patent document cited in search report | | Publication date | Patent family member(s) | | Publication date |
|---|---|---|---|---|---|
| WO 2008089288 | A2 | 24-07-2008 | CA | 2674531 A1 | 24-07-2008 |
| | | | EP | 2116088 A2 | 11-11-2009 |
| | | | JP | 2010517376 T | 20-05-2010 |
| | | | US | 2008227465 A1 | 18-09-2008 |
| US 2008046965 | A1 | 21-02-2008 | US | 2008052395 A1 | 28-02-2008 |
| WO 2006002458 | A1 | 12-01-2006 | CN | 101044711 A | 26-09-2007 |
| | | | EP | 1782569 A1 | 09-05-2007 |
| | | | JP | 2008505570 T | 21-02-2008 |
| | | | US | 2008209521 A1 | 28-08-2008 |
| US 2009215427 | A1 | 27-08-2009 | NONE | | |

EPO FORM P0459

For more details about this annex : see Official Journal of the European Patent Office, No. 12/82